# EUROPÄISCHE PATENTSCHRIFT

(11) **EP 3 271 825 B1**
(45) Veröffentlichungstag und Bekanntmachung des Hinweises auf die Patenterteilung: **19.02.2020**
(21) Anmeldenummer: 16710433.0
(22) Anmeldetag: 17.03.2016
(51) Int. Cl.: G06F 12/02, G06F 3/06

(54) **VERFAHREN ZUM SPEICHERN VON NUTZERDATEN IN EINEM DOKUMENT**
METHOD FOR STORING USER DATA IN A DOCUMENT
PROCÉDÉ DE STOCKAGE DE DONNÉES D'UTILISATEUR DANS UN DOCUMENT

(30) Priorität: 17.03.2015 DE 102015204824
(43) Veröffentlichungstag der Anmeldung: 24.01.2018
(73) Patentinhaber: Bundesdruckerei GmbH, 10969 Berlin (DE)
(72) Erfinder: MÜLLER, Frank, 10407 Berlin (DE); SCHOLZE, Steffen, 13469 Berlin (DE); SCHWAN, Matthias, 10437 Berlin (DE); WIRTH, Klaus Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/055746
(87) Internationale Veröffentlichungsnummer: WO 2016/146717

(56) Entgegenhaltungen:
- US-A1- 2002 029 254
- US-A1- 2004 228 533
- US-A1- 2009 271 562
- US-A1- 2012 265 934

## Beschreibung

Die Erfindung betrifft ein Verfahren zum Speichern von Nutzdaten in einem nichtflüchtigen Speicher eines Dokuments, sowie ein Dokument und ein System aus einem Chipkartenterminal zum Speichern von Nutzerdaten in ein Dokument und einem Dokument.

Im Stand der Technik ist eine Vielzahl von Dokumenten, insbesondere Sicherheits- oder Ausweisdokumente bekannt, welche als Chipkarte mit einer Rechenlogik ausgeführt sind. Dabei wird üblicherweise in einem nicht-flüchtigen Speicherbereich der Chipkarte Nutzerdaten, wie beispielsweise Passbilder, Fingerabdrücke, oder ähnliches gespeichert, welche durch einen Prozessor der Chipkarte beispielsweise im Zuge eines Authentifizierungsverfahrens zur Feststellung der Identität eines Dokumenteninhabers genutzt werden können.

Die Druckschrift US 2002/0029254 A1 offenbart ein Verfahren und ein System zur Handhabung von persönlichen Daten, das einen server-ähnlichen Zugriff auf eine sog. smart card ermöglicht und eine Vielzahl von Anwendungen unterstützt, die von unterschiedlichen Anbietern angeboten werden.

Die Druckschrift US 2009/0271562 A1 offenbart ein Verfahren und ein System zur Neuzuordnung von Speicheradressen für eine sog. Multibank-Speichereinheit.

Im Folgenden wird unter einem belegten Speicherbereich die Menge aller Speicheradressen verstanden, die einem Datenblock zugeordnet sind, welcher Nutzerdaten enthält.

Chipkarten werden heutzutage mit einem in seiner nutzbaren Speichergröße stark begrenzten internen Chipkartenspeicher gefertigt. Insbesondere bei der Verwendung einer Chipkarte als Ausweisdokument wird über die Lebensdauer der Chipkarte eine Vielzahl von Daten in dem Speicher der Chipkarte abgelegt. Da der Speicher der Chipkarte nicht nachträglich vergrößert werden kann und insbesondere bei der Verwendung einer Chipkarte als Ausweisdokument eine Löschung von Daten von der Chipkarte nicht vorgesehen ist, wird früher oder später der Chipkartenspeicher nicht mehr für die reguläre Benutzung der Chipkarte als Ausweisdokument ausreichen.

Der vorliegenden Erfindung liegt daher die Aufgabe zugrunde, ein verbessertes Verfahren zum Speichern von Nutzerdaten in einem Dokument zu schaffen.

Diese Aufgabe wird jeweils mit den Merkmalen der unabhängigen Patentansprüche gelöst. Ausführungsformen der Erfindung sind mit den abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "Dokument" wird hier insbesondere ein tragbares elektronisches Gerät verstanden, welches zumindest einen Datenspeicher zur Speicherung zumindest eines Attributs und eine Kommunikationsschnittstelle zum Auslesen des Attributs aufweist. Vorzugsweise hat das Dokument einen gesicherten Speicherbereich zur Speicherung des zumindest einen Attributs um zu verhindern, dass das in dem Speicherbereich gespeicherte Attribut in unerlaubter Weise verändert oder ohne die dafür erforderliche Berechtigung ausgelesen wird.

Insbesondere kann es sich bei dem Dokument um ein Wert- oder Sicherheitsdokument handeln. Unter einem Dokument werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente und Signaturkarten sowie auch Chipkartenzahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

In einem Aspekt betrifft die Erfindung ein Verfahren zum Speichern von Nutzerdaten in einem nicht-flüchtigen Speicher eines Dokuments. Dabei umfasst der nicht-flüchtige Speicher des Dokuments unbelegte Speicherbereiche und Speicherbereiche welche mit Nutzerdaten belegt sind. Bei den Nutzerdaten handelt es sich dabei um zusammenhängende Datenblöcke. Ferner weist das Dokument einen flüchtigen Speicher, sowie eine Kommunikationsschnittstelle auf. Das Speichern der Nutzerdaten umfasst dann zunächst das Empfangen der Nutzerdaten über die Kommunikationsschnittstelle. Die so empfangenen Nutzerdaten werden anschließend komprimiert und in dem flüchtigen Speicher des Dokuments gespeichert. Anschließend wird die notwendige Länge eines unbelegten zusammenhängenden Speicherbereichs zur Speicherung der komprimierten Nutzerdaten in dem nicht-flüchtigen Speicher des Dokuments ermittelt. Es wird dann ermittelt, ob der nicht-flüchtige Speicher des Dokuments einen zusammenhängenden unbelegten Speicherbereich aufweist, dessen Länge mindestens der zuvor ermittelten Länge entspricht. Sollte dies nicht der Fall sein, d.h. kein zusammenhängender unbelegter Speicherbereich mit mindestens der zuvor ermittelten Länge gefunden werden, wird in einem nachfolgenden Schritt der nicht-flüchtige Speicher des Dokuments defragmentiert. Dabei umfasst das Defragmentieren ein Umordnen der in den belegten Speicherbereichen gespeicherten Nutzerdaten, sodass mehrere der unbelegten Speicherbereiche einen zusammenhängenden unbelegten Speicherbereich bilden, der zumindest die zuvor ermittelte Länge aufweist. Abschließend werden die komprimierten Nutzerdaten aus dem flüchtigen Speicher des Dokuments in den unbelegten Speicherbereich des nicht-flüchtigen Speichers des Dokuments verschoben.

Zusätzlich kann zunächst vor Beginn des Defragmentiervorgangs geprüft werden, ob die Gesamtheit aller freien Speicherbereiche zusammengenommen ausreichen würde, die zu speichernden komprimierten Nutzerdaten aufzunehmen. Dabei wird vorzugsweise ein Defragmentiervorgang nur dann angestoßen, wenn zuvor ermittelt wurde, dass die Gesamtheit aller freien Speicherbereiche ausreicht um die komprimierten Nutzerdaten aufzunehmen, da andernfalls auch eine Defragmentierung nicht dazu führen würde, dass die komprimierten Nutzerdaten in dem nichtflüchtigen Speicher des Dokuments gespeichert werden können.

Es wäre jedoch auch möglich eine Defragmentierung des Dokumentenspeichers durchzuführen, obwohl zuvor ermittelt wurde, dass auch durch die Defragmentierung kein ausreichend großer freier Speicher zur Speicherung der komprimierten Nutzerdaten geschaffen werden kann. Hierdurch könnte für einen späteren Speichervorgang in dem beispielsweise komprimierte Nutzerdaten mit einem geringeren Speicherbedarf gespeichert werden sollen, bereits im Voraus freier Speicherplatz geschaffen werden, sodass der spätere Speichervorgang aufgrund des Wegfalls der Speicherdefragmentierung vereinfacht bzw. verkürzt wird.

Es sei an dieser Stelle angemerkt, dass unter einem zusammenhängenden Speicherbereich neben einem physikalisch zusammenhängenden Speicherbereich auch ein logisch zusammenhängender Speicherbereich mit fortlaufenden Speicheradressen zu verstehen ist. Dabei können die physikalischen Adressen eines logisch zusammenhängenden Speichers auch nicht zusammenhängend sein, beispielsweise infolge eines bei Chipkarten üblichen Scramblings des Speichers.

Ein Verschieben von Daten kann entsprechend logisch oder physikalisch umgesetzt sein.

Ausführungsformen der Erfindung könnten den Vorteil haben, dass durch die Kompression der Nutzerdaten bei der Speicherung der Nutzerdaten in dem nichtflüchtigen Speicher des Dokuments der vorhandene Speicher des Dokuments logisch erweitert wird. Insgesamt wird es durch die Kompression von in dem Dokument zu speichernden Daten möglich, eine größere Menge an Daten in der Chipkarte zu speichern. Dabei kann je nach Art der Nutzerdaten eine verlustfreie oder eine verlustfreie Kompression verwendet werden.

Handelt es sich beispielsweise bei den Nutzerdaten um Passwörter, Geburtsdaten, Gültigkeitszeiträume oder ähnliches, ist eine verlustfreie Kompressionsmethode vonnöten, da andernfalls kritische Dateninhalte der Nutzerdaten verloren gehen könnten. Handelt es sich bei den Nutzerdaten jedoch beispielsweise um Bilddaten, wie Profilbilder kann auch eine verlustbehaftete Kompressionsmethode Anwendung finden. Dies setzt jedoch voraus, dass in den Bilddaten keine sicherheitsrelevanten Merkmale aufgrund der verlustbehafteten Kompression verloren gehen. So wäre es beispielsweise unproblematisch, wenn in einem Profilbild die Frisur der abgebildeten Person aufgrund der Kompression mit Verlusten behaftet ist. Treten jedoch Verluste im Bereich biometrischer Merkmale, wie der Position der Augen oder der relativen Lage von Augen zu Nase zu Mund auf, kann das Profilbild möglicherweise nicht mehr zur Identifikation des Dokumenteninhabers verwendet werden. In diesem Fall würde eine verlustbehaftete Kompression ausscheiden. Weitere Beispiele für Bilddaten, welche nicht oder nur schlecht für die Anwendung einer verlustbehafteten Kompression geeignet wären, sind Fingerabdrücke oder Daten welche über eine Signatur der Daten abgesichert sind. Während die Kompression eines Fingerabdrucks wichtige Merkmale des Fingerabdrucks verfälschen könnte, könnte eine verlustbehaftete Kompression von Daten, die über Signaturen abgesichert sind dazu führen, dass nach der Kompression die Signatur der Daten verändert ist. In diesem Fall wäre die Absicherung der Daten fehlerhaft.

Ausführungsformen der Erfindung könnten ferner den Vorteil haben, dass es aufgrund des Defragmentierungsvorgangs möglich wird, komprimierte Nutzerdaten auch dann in dem nicht-flüchtigen Speicher eines Dokuments zu speichern, wenn dieser zunächst keinen ausreichend großen zusammenhängenden unbelegten Speicherbereich aufweist, um die komprimierten Nutzerdaten zu speichern. Durch den Defragmentierungsvorgang ist also die Ausnutzung eines Speichers eines Dokuments, welcher zumeist ohnehin sehr begrenzt ist, in verbesserter Art und Weise möglich. Somit können auch über einen längeren Zeitraum wiederholt Nutzerdaten in dem Speicher des Dokuments abgelegt werden, wobei vermieden wird, dass aufgrund einer Fragmentierung des Speichers der effektiv nutzbare Speicher des Dokuments schrumpft.

Nach einer Ausführungsform handelt es sich bei den Nutzerdaten, welche in dem nicht-flüchtigen Speicher des Dokuments gespeichert werden um Visa-Daten. Grade die Speicherung von Visa-Daten in einem Dokument kann aufgrund des geringen Dokumentenspeichers problematisch sein, da es keine gesetzlichen Vorgaben für die Größe von Einreise- und Ausreisestempel gibt. Daher kann bei reger Reisetätigkeit der Speicher eines Ausweisdokuments, wie beispielsweise eines Reisepasses sehr schnell voll sein. Da ferner nicht vorgesehen ist, dass einmal in einem Dokument gespeicherte Visa-Daten in der weiteren Lebensdauer des Dokuments wieder aus diesem entfernt werden, ist die Lebensdauer des Dokuments begrenzt. Insbesondere die mit den Visa-Daten gespeicherten Bilddaten, wie beispielsweise digitale Formen von Einreise- oder Ausreise-Stempeln bieten jedoch die Möglichkeit, den Speicherbedarf der Visa-Daten durch Kompression der Bilddaten zu verringern. Dabei kann es grade bei den Bilddaten sogar möglich sein, dass eine verlustbehaftete Kompression der Daten angewendet wird. Demgegenüber muss jedoch beispielsweise bei Ein- oder Ausreisedaten dringend auf die Verwendung einer verlustfreien Kompressionsmethode geachtet werden, da durch die Kompression keine Änderungen in den Text- oder Zahleninhalten der Visa-Daten entstehen dürfen.

Nutzerdaten und insbesondere auch Visa-Daten können nach Ausführungsformen in einer Form einer TLV-Struktur (Tag Length Value) angelegt sein. Bei einer TLV-Struktur handelt sich um eine Datenstruktur, welche die Organisation von Daten vereinfachen soll. Hierzu ist neben dem Inhalt der Datenstruktur (Value) in einem Kopf der Struktur auch ein Kennzeichen für die Art der enthaltenen Daten (Tag) und die Länge des Datenobjekts angegeben. Arbeitet ein Programm, das beispielsweise nur eine bestimmte Art von Datenobjekten verarbeiten kann, eine Reihe von TLV-Strukturen ab, kann es zunächst prüfen, ob der Dateninhalt einer TLV-Struktur überhaupt verarbeitet werden kann, indem der Tag der TLV-Struktur ausgelesen wird. Sollte hierbei durch das Programm festgestellt werden, dass die Art der enthaltenen Daten nicht mit dem Programm verarbeitet werden können, kann das Programm die TLV-Struktur einfach überspringen, da die Länge der Struktur in dem Wert L angegeben ist. Die Verwendung von TLV-Strukturen für die Speicherung von Nutzerdaten setzt jedoch voraus, dass die Nutzerdaten in einem zusammenhängenden Speicherbereich abgelegt werden. Daher ist insbesondere bei der Verwendung von TLV-Strukturen zur Speicherung von Nutzerdaten die Möglichkeit der Defragmentierung des Chipkartenspeichers zur Schaffung logisch zusammenhängender Speicherbereiche vorteilhaft.

Nach einer weiteren Ausführungsform werden die Nutzerdaten bereits während des Empfangens der Nutzerdaten über die Kommunikationsschnittstelle komprimiert. Ausführungsformen der Erfindung könnten den Vorteil haben, dass ein Zwischenspeichern der empfangenen Nutzerdaten in einem flüchtigen Speicher des Dokuments entfallen kann. Somit kann einerseits das Dokument mit einer geringeren Zahl an Speicherelementen produziert werden und gleichzeitig die benötigte Zeit zum Speichern von Nutzerdaten in das Dokument reduziert werden.

Nach einer Ausführungsform der Erfindung umfasst das Defragmentieren das Umordnen der in den belegten Speicherbereichen gespeicherten Nutzerdaten durch ein physikalisches Verschieben der Nutzerdaten. Die Nutzerdaten werden also von ihrem ursprünglichen Speicherbereich an einen neuen, unbelegten Speicherbereich kopiert und in ihrem ursprünglichen Speicherbereich gelöscht. Dabei können die in einem belegten Speicherbereich abgelegten Nutzerdaten auch in einen angrenzenden Bereich verschoben werden, der zunächst nicht ausreichend groß ist, um den gesamten Datenblock aufzunehmen. In diesem Fall würde während des Verschiebens ein erster Teil der Nutzerdaten von seiner ursprünglichen Speicheradresse an eine neue Speicheradresse verschoben. Wird dies für folgende weitere Teile der Nutzerdaten wiederholt, ist es irgendwann möglich, dass ein Teil der Nutzerdaten in einen Speicherbereich kopiert wird, in dem ein Teil der grade zu verschiebenden Nutzerdaten ursprünglich abgelegt war. Hierdurch werden die ursprünglichen Nutzerdaten nach und nach überschrieben. Dies birgt jedoch die Gefahr, dass bei einem Stromausfall während des Verschiebevorgangs segmentierte und nicht mehr lesbare Nutzerdaten entstehen.

Nach einer weiteren Ausführungsform ist die logische Reihenfolge der Speicherbereiche des nicht-flüchtigen Speichers des Dokuments durch eine Zuordnungstabelle festgelegt. Das Defragmentieren des Speichers des Dokuments umfasst dann das Umordnen der belegten Speicherbereiche durch Manipulation der Zuordnungstabelle. Beispielsweise kann in dem Dokument eine Speicherverwaltungseinheit (Memory Management Unit MMU) vorgesehen sein, welche die Adressierung des nichtflüchtigen Speichers durch den Prozessor anhand der Zuordnungstabelle umsetzt.

Sowohl das zuvor beschriebene Defragmentieren durch physikalisches Verschieben von Speicherbereichen als auch das Defragmentieren durch Manipulation einer Zuordnungstabelle kann unter bestimmten Umständen vorteilhaft sein. So kann durch einfaches logisches Umsortieren der Speicherbereiche des nicht-flüchtigen Speichers durch Manipulation der Zuordnungstabelle der Speicher sehr schnell defragmentiert werden. Beispielsweise kann in den Zuordnungstabellen eine zusätzliche Sprungadresse eingefügt werden, sodass bei einem Aufruf einer Speicheradresse durch den Chipkartenprozessor der Chipkartenprozessor durch die MMU an die Speicherposition verwiesen wird, an der die entsprechenden Nutzerdaten nach der Defragmentierung abgelegt sind. Allerdings kann es hier vorkommen, dass bei wiederholtem Defragmentieren durch Manipulation der Zuordnungstabelle eine Verkettung von Sprungbefehlen entsteht, sodass die Zugriffszeit, welche ein Prozessor eines Dokuments benötigt, um die Nutzerdaten aus dem Speicher abzurufen, zunimmt.

Das Defragmentieren durch physikalisches Verschieben umgeht hingegen dieses Problem, da keine zusätzlichen Sprungbefehle in einer Zuordnungstabelle entstehen, sondern die Blöcke von Nutzerdaten tatsächlich im physikalischen Speicher verschoben werden. Handelt es sich allerdings bei den zu verschiebenden Nutzerdaten um sehr viele und/oder sehr große Speicherbereiche, ist ein physikalisches Verschieben mit einem erheblichen Aufwand verbunden. Ferner ist das Kopieren und anschließende Löschen von Nutzerdaten fehleranfällig, da während des Kopierens unter Umständen auch Fehler in die Nutzerdaten eingefügt werden könnten beziehungsweise bei nicht-atomaren Verschiebungsvorgängen Datenblöcke oder - teile gelöscht oder verdoppelt werden könnten.

Daher ist es nach einer weiteren Ausführungsform der Erfindung vorgesehen, je nach Situation eines der beiden vorgenannten Defragmentierungsverfahren zu verwenden. Hierzu kann beispielsweise zunächst ein Schwellwert für die Länge eines belegten Speicherbereichs definiert werden, wobei die Entscheidung, ob ein belegter Speicherbereich durch Manipulation der Zuordnungstabelle oder durch physikalisches Verschieben defragmentiert werden soll, von dem besagten Schwellwert abhängt. So könnte beispielsweise das Verschieben von in belegten Speicherbereichen gespeicherten Nutzerdaten mit einer Länge, die größer ist als der Schwellwert durch Manipulation der Zuordnungstabelle erfolgen, während das Verschieben von in belegten Speicherbereichen gespeicherten Nutzerdaten mit einer Länge, die kleiner oder gleich dem Schwellwert ist durch physikalisches Verschieben der Nutzerdaten erfolgt. Somit kann je nach Anwendungsfall das jeweils beste Verfahren zur Defragmentierung des nicht-flüchtigen Speichers ausgewählt werden.

Ebenso sind andere Strategien möglich nach denen für die Verschiebung eines einzelnen Blocks festgelegt werden kann, ob die Umordnung des Blockes logisch oder physikalisch erfolgen soll. Dabei kann die Entscheidung, ob ein Block physikalisch oder logisch verschoben werden soll, einer beliebig gestaltbaren Heuristik unterliegen.

Nach einer weiteren Ausführungsform der Erfindung umfasst das Defragmentieren zunächst das Ermitteln einer ersten Position eines im Sinne der Speicheradressierung ersten, unbelegten Speicherbereichs, d.h. des Blocks mit der kleinsten Speicheradresse. Anschließend wird eine zweite Position eines zweiten, belegten Speicherbereichs ermittelt, wobei der zweite belegte Speicherbereich im Speicher dem ersten freien Speicherbereich bezüglich der Speicheradressierung direkt nachfolgt. Anschließend werden die im zweiten belegten Speicherbereich gespeicherten Nutzerdaten an die zuvor ermittelte erste Position verschoben. Dabei kann das Verschieben sowohl logisch als auch physikalisch erfolgen. Die Schritte des Ermitteln eines unbelegten Speicherbereiches sowie des dem unbelegten Speicherbereich nachfolgenden belegten Speicherbereichs und das Verschieben der in dem so ermittelten belegten Speicherbereich abgelegten Nutzerdaten können dabei so lange wiederholt werden, bis auf den ermittelten ersten unbelegten Speicherbereich kein belegter Speicherbereich mehr folgt. Alternativ kann im Laufe einer Iteration der beschrieben Schritte fortlaufend geprüft werden, ob zwischenzeitlich ein ausreichend großer, zusammenhängender, freier Speicherbereich entstanden ist, sodass die Nutzerdaten in dem nicht-flüchtigen Speicher gespeichert werden können. In diesem Fall kann auch vorgesehen sein, dass die Defragmentierung abgebrochen wird, sobald der verfügbare, zusammenhängende, freie Speicher ausreichend groß ist, um die Nutzerdaten aufzunehmen.

Ausführungsformen der Erfindung könnten den Vorteil haben, dass durch den beschriebenen Algorithmus auf einfache Art und Weise ein Speicher eines Dokuments defragmentiert werden kann. Somit kann die entsprechende Logik zur Durchführung des Defragmentierungsvorgangs in dem Dokument mit einfachen Mitteln realisiert werden.

Nach einer weiteren Ausführungsform umfasst das Defragmentieren zunächst das Ermitteln der jeweiligen Positionen und Längen der belegten Speicherbereiche und das Ermitteln der jeweiligen Positionen und Längen der unbelegten Speicherbereiche. Anschließend wird ausgehend von der niedrigsten Speicheradresse der erste unbelegte Speicherbereich bestimmt und überprüft, ob einer der nachfolgenden Blöcke die gleiche Länge besitzt. Sollte dies der Fall sein, wird dieser Block in den unbelegten Speicherbereich verschoben. Ausgehend von diesem veränderten Speicher wird das Verfahren für den nächsten, dem verschobenen Block nachfolgenden freien Speicherbereich iteriert. Die Iteration erfolgt bis ein unbelegter Speicherbereich erreicht ist, dem kein belegter Speicherbereich mehr folgt. Alternativ kann die Iteration auch dann abgebrochen werden, wenn nach dem Verschieben eines belegten Speicherbereichs ein unbelegter, zusammenhängender Speicherbereich entstanden ist, der ausreichend groß ist, die zu speichernden Nutzerdaten aufzunehmen. Nach einer weiteren Ausführungsform könnten belegte Speicherbereiche an die Positionen von unbelegten Speicherbereichen gleicher oder größerer Länge verschoben werden.

Ausführungsformen der Erfindung könnten den Vorteil haben, dass die Zahl der Verschiebungsvorgänge durch das beschriebene Defragmentierungsverfahren gegenüber einem Verfahren, in dem die belegten Speicherbereiche sukzessive aneinandergeschoben werden, reduziert werden kann. So kann es beispielsweise vorkommen, dass nach einem ersten belegten Speicherbereich ein unbelegter Speicherbereich einer definierten Länge existiert, wobei auf den unbelegten Speicherbereich eine Kette von belegten Speicherbereichen folgt. Entspricht dabei beispielsweise die Länge des letzten belegten Speicherbereichs der Kette der Länge des unbelegten Speicherbereichs nach dem ersten belegten Speicherbereich, so kann die Defragmentierung gemäß dem zuvor beschriebenen Verfahren dadurch umgesetzt werden, dass einzig und allein der letzte belegte Speicherbereich an die Position des unbelegten Speicherbereichs verschoben wird. Alle übrigen belegten Speicherbereiche müssen hierbei nicht verschoben werden. Somit kann vermieden werden, dass während eines Defragmentierungsvorgangs jeder einzelne belegte Speicherbereich in der Kette verschoben wird.

Nach einer weiteren Ausführungsform der Erfindung umfasst das Defragmentieren ferner das Erzeugen einer Protokolldatei, wobei die Protokolldatei die während eines Defragmentiervorgangs erfolgten Verschiebungen von Speicherbereichen wiedergibt.

Dies kann den Vorteil haben, dass bei einem unerwarteten Abbruch des Defragmentiervorgangs entweder der Defragmentiervorgang zu einem späteren Zeitpunkt an der gleichen Stelle fortgesetzt, oder anhand der Protokolldatei der Ursprungszustand vor Beginn des Defragmentiervorgangs rekonstruiert werden kann.

Bei atomarer Ausführung der nur auf einen Speicherbereich bezogenen einzelnen Verschiebungsschritte kann zusätzlich vermieden werden, dass ein Dokument aufgrund eines unvollendeten Defragmentiervorgangs, welcher die in dem Dokument gespeicherten Nutzerdaten beschädigen könnte, unbrauchbar wird.

Die zuvor beschriebenen Ausführungsformen einer Speicherumordnung können ferner so modifiziert werden, dass der Defragmentierungsvorgang abgebrochen wird, beispielsweise, sobald ein unbelegter Speicherbereich der nötigen Größe frei ist.

In einem weiteren Aspekt betrifft die Erfindung ein Dokument mit Speichermitteln, Prozessormitteln und einer Kommunikationsschnittstelle, insbesondere einer kontaktlosen Kommunikationsschnittstelle. Das Dokument ist dabei dazu ausgebildet, über die Kommunikationsschnittstelle Nutzerdaten zum Speichern in den Speichermitteln des Dokuments zu empfangen. Dabei sind die Prozessormittel und die Speichermittel des Dokuments dazu ausgebildet, das Verfahren, welches zuvor beschrieben wurde, auszuführen. Bei der Kommunikationsschnittstelle kann es sich hier sowohl um eine kontaktbehaftete Schnittstelle als auch um eine kontaktlose Schnittstelle handeln. Beispielweise kann die Schnittstelle dabei gemäß ISO 14443 ausgebildet sein. Insbesondere kann es sich bei der Kommunikationsschnittstelle um eine NFC-Schnittstelle handeln. Über die Kommunikationsschnittstelle kann ferner Energie zum Betrieb des Dokuments durch eine externe Energiequelle, beispielsweise ein Terminal, in das Dokument eingekoppelt werden.

Dabei kann die Verwendung einer kontaktlosen Schnittstelle den Vorteil haben, dass eine Kontaktlosschnittstelle deutlich weniger anfällig für Verschleißerscheinungen ist, als eine kontaktbehaftete Schnittstelle. Speziell bei Verwendung einer kontaktbehafteten Schnittstelle in Kombination mit einer mechanischen Aufnahme eines Terminals würden durch die Reibung der kontaktbehafteten Schnittstelle innerhalb der Aufnahme die Kontakte schnell abgenutzt, wodurch eine Benutzung des Dokuments unmöglich würde. Durch die Verwendung einer kontaktlosen Schnittstelle könnte daher die Lebensdauer eines Dokuments verbessert werden.

In einem weiteren Aspekt betrifft die Erfindung ein elektronisches System aus einem Chipkartenterminal zum Speichern von Nutzerdaten in einem Dokument und einem solchen Dokument. Das Chipkartenterminal umfasst dabei eine Kommunikationsschnittstelle und ist dazu ausgebildet, über die Kommunikationsschnittstelle Daten mit dem Dokument auszutauschen. Das Chipkartenterminal ist ferner dazu ausgebildet über die Kommunikationsschnittstelle die Nutzerdaten in das Dokument zu speichern.

Nach einer Ausführungsform der Erfindung umfasst das Chipkartenterminal ferner eine mechanische Aufnahme für das Dokument, wobei die mechanische Aufnahme dazu ausgebildet ist, bei einem Nachladevorgang das Dokument so lange vor einem Entfernen aus dem Chipkartenterminal zu schützen, bis das Nachladen der Nutzerdaten auf das Dokument gegebenenfalls einschließlich der Defragmentierung abgeschlossen ist.

Insbesondere bei Chipkarten erfolgt üblicherweise die Stromversorgung der Prozessormittel der Chipkarte über eine RFID-Schnittstelle durch das Chipkartenterminal. Würde nun das Dokument während eines Defragmentierungs- bzw. Nachladevorgangs zu früh aus dem Chipkartenterminal entnommen, würde die Stromversorgung des Dokuments unterbrochen und ein möglicherweise angestoßener Defragmentiervorgang könnte nicht fertiggestellt werden. Hierdurch könnte unter Umständen das Dokument unbrauchbar werden. Ausführungsformen der Erfindung könnten den Vorteil haben, dass dieses Risiko effektiv vermieden werden könnte, indem das Dokument beispielsweise in einem Schlitz oder einer andersartigen mechanischen Aufnahme des Chipkartenterminals vollständig aufgenommen und somit vor einem Zugriff durch einen Benutzer geschützt ist. Nach Beenden des Nachladevorgangs könnte dann das Dokument aus der mechanischen Aufnahme des Chipkartenterminals ausgeworfen werden.

Dabei kann bei Verwendung einer kontaktlosen Kommunikation zwischen Chipkartenterminal und Dokument trotz Verwendung einer mechanischen Aufnahme der Verschleiß des Dokuments auf ein Minimum reduziert werden. Die Kontaktfläche zwischen Dokument und Aufnahme des Chipkartenterminals ist für die Kommunikation zwischen Dokument und Chipkartenterminal, sowie für die Einkopplung von Energie zum Betrieb des Dokuments irrelevant. Somit führen Reibungseffekte auf der Oberfläche des Dokumentenkörpers nicht zu einer Beeinträchtigung der Funktionsfähigkeit des Dokuments. Gleichzeitig kann durch die Kombination einer mechanischen Aufnahme mit einer kontaktlosen Kommunikation die Integrität der auf dem Dokument gespeicherten Daten gewahrt werden, da ein vorzeitiges Entfernen des Dokuments aus dem Chipkartenterminal ausgeschlossen werden kann. Hierdurch kann während des Nachladevorgangs eine unterbrechungsfreie Kommunikation und Energiezufuhr gewährleistet werden.

Im Folgenden werden bevorzugt Ausführungsformen der Erfindung anhand der Zeichnungen näher erläutert. Es zeigen:
- Figur 1: ein Blockdiagramm eines erfindungsgemäßen Systems aus Dokument und Chipkartenterminal,
- Figur 2: eine schematische Darstellung eines ersten Defragmentierungsverfahrens,
- Figur 3: schematische Darstellung eines zweiten Defragmentierungsverfahrens,

Im Folgenden werden einander ähnliche Elemente mit gleichen Bezugszeichen gekennzeichnet.

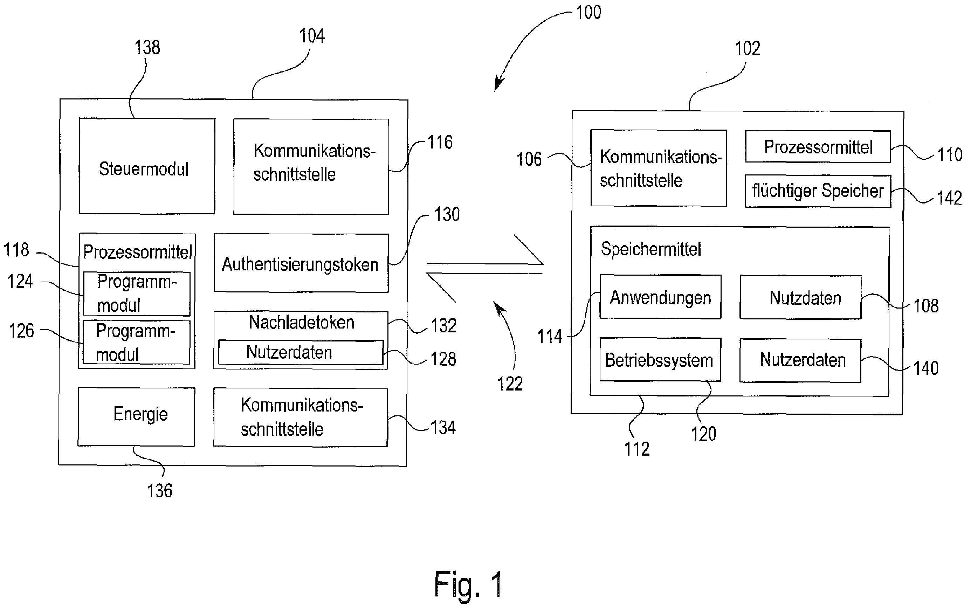

Die Figur 1 zeigt ein Blockdiagramm eines erfindungsgemäßen Systems 100 zum Nachladen einer von Nutzerdaten 128 auf ein Dokument 102 durch ein Chipkartenterminal 104. Dabei umfasst das Dokument 102 eine Kommunikationsschnittstelle 106. Ferner umfasst das Dokument 102 Prozessormittel 110 sowie nicht-flüchtige Speichermittel 112. Bei den Speichermitteln 112 kann es sich beispielsweise um einen nichtflüchtigen Flash-basierten Speicher handeln. Die Speichermittel 112 beinhalten in der hier dargestellten Ausführungsform eine logische Datenstruktur (LDS). In der logischen Datenstruktur sind neben einem Chipkartenbetriebssystem 120 und Nutzdaten 108 auch Anwendungen 114 des Dokuments 102, sowie Nutzerdaten 140 wie beispielsweise Visa-Daten enthalten. Ferner enthält das Dokument 102 einen flüchtigen Speicher 142, welcher als Arbeitsspeicher genutzt werden kann.

Das Chipkartenterminal 104 umfasst ebenfalls eine Kommunikationsschnittstelle 116, sowie Prozessormittel 118. Bei den Prozessormitteln 118 kann es sich um einen oder mehrere Ein- oder Mehrkernprozessoren handeln. Ferner umfasst das hier dargestellte Chipkartenterminal 104 ein Steuermodul 138, sowie ein Authentisierungstoken 130, ein Nachladetoken 132, eine zweite Kommunikationsschnittstelle 134 sowie eine Energiequelle 136.

Bei der Energiequelle 136 kann es sich beispielsweise um eine Batterie oder eine stromerzeugende Einheit wie beispielsweise eine Brennstoffzelle oder eine Solarzelle handeln. Die Verwendung einer solchen abgeschlossenen Energiequelle 134 könnte den Vorteil haben, dass das Chipkartenterminal 104 zum einen vollständig autark und zum anderen auch portabel gestaltet werden kann. Es kann sich bei der Energiequelle 134 jedoch auch um ein Netzteil oder eine andersartige Verbindung zu einer externen Energieversorgung handeln. Ferner ist auch eine Kombination aus externer und interner Energieversorgung möglich, dass die Ausfallsicherheit des Chipkartenterminals 104 verbessern würde.

Die zweite Kommunikationsschnittstelle 134 des Chipkartenterminals 104 kann beispielsweise zur Administration des Chipkartenterminals 104 ausgebildet sein. Es kann sich beispielsweise bei der Kommunikationsschnittstelle 134 um einen Ethernet-Anschluss handeln. Der Authentisierungstoken 130 sowie auch der Nachladetoken 132 können sowohl als Softwaretoken als auch als Hardwaretoken zum Beispiel in Form einer Chipkarte zum Einstecken in das Chipkartenterminal 104 ausgeprägt sein. Beispielsweise kann im Falle des Nachladens von Visa-Daten der Nachladetoken 132 von einer Passstelle oder einer diplomatischen Vertretung eines Landes bereitgestellt werden und enthält dann Nutzerdaten 128, welche das Dokument 102 mit einem elektronischen Reisevisum für den Inhaber des Dokuments 102 ausstatten, oder ein in dem Dokument 102 vorhandenes Visum mit Ein- oder Ausreisestempel, sowie entsprechenden Ein- und Ausreisedaten zu versehen können. Es ist jedoch auch möglich, dass der Nachladetoken 132 fest in dem Chipkartenterminal 104 eingebaut ist. Der Nachladetoken 132 kann dabei auch als Speicherbereich innerhalb des Chipkartenterminals 104 ausgebildet sein.

Die Kommunikationsschnittstelle 116, über welche eine Kommunikation des Chipkartenterminals 104 mit dem Dokument 102 gewährleistet werden soll, kann zusätzlich eine mechanische Aufnahme zur teilweisen oder vollständigen Aufnahme des Dokuments 102 in dem Chipkartenterminal 104 besitzen. Dabei kann die Aufnahme dergestalt sein, dass er das Dokument 102 zumindest für die Dauer des Nachladevorgangs vor einer Entnahme aus dem Chipkartenterminal 104 durch einen Dokumentenbenutzer schützt. Hierdurch kann während des Nachladevorgangs eine unterbrechungsfreie Kommunikation und Energiezufuhr gewährleistet werden.

Das Chipkartenterminal 104 ist dazu ausgebildet, über die Kommunikationsschnittstelle 116 mit dem Dokument 102 zu kommunizieren und Daten auszutauschen. Hierzu kann die Kommunikationsschnittstelle 116 eine Datenverbindung 122 mit der Kommunikationsschnittstelle 106 des Dokuments 102 aufbauen. Dabei kann die Datenverbindung 122 zwischen Dokument 102 und Chipkartenterminal 104 über die Kommunikationsschnittstellen 116 und 106 beispielsweise gemäß ISO 14443 ausgebildet sein. Zum Aufbau einer solchen Datenverbindung 122 kann es vorgesehen sein, dass zunächst ein Identifizierungs- und Authentifizierungsvorgang zwischen dem Dokument 102 und dem Chipkartenterminal 104 ausgeführt wird. Hierzu kann ein entsprechendes Programmmodul 124 in den Prozessormitteln 118 des Chipkartenterminals 104 vorgesehen sein. Beispielsweise kann im Zuge des Authentifizierungsverfahrens ein gegenseitiger Austausch von Sicherheitszertifikaten vorgesehen sein, welche in den Speichermitteln 112 des Dokuments 102 bzw. in einem entsprechenden Authentisierungstoken 130 des Chipkartenterminals 104 abgelegt sind. Die im Sinne der vorliegenden Erfindung möglichen Authentifizierungsverfahren sind jedoch nicht hierauf beschränkt.

Sobald eine sichere Datenverbindung 122 zwischen dem Dokument 102 und dem Chipkartenterminal 104 aufgebaut wurde, können die Prozessormittel 118 des Chipkartenterminals 104 ein weiteres Programmmodul 126 aufrufen, um Nutzerdaten 128, welche in dem Nachladetoken 132 des Chipkartenterminals 104 abgelegt sind, in den Speichermitteln 112 des Dokuments 102 zu speichern. In diesem Fall kann vorgesehen sein, dass zunächst eine Information an das Dokument 102 übermittelt wird, in welcher das Dokument 102 über den zur Speicherung der Nutzerdaten 128 notwendigen Speicherplatz informiert wird. Das Dokument 102 bzw. die Prozessormittel 110 können dann überprüfen, ob in den Speichermitteln 112 ein entsprechend großer zusammenhängender unbelegter Speicherbereich existiert, welcher geeignet ist, die zu installierende Anwendung 128 aufzunehmen.

Stellen die Prozessormittel 110 dabei fest, dass in den Speichermitteln 112 bereits ein ausreichend großer zusammenhängender unbelegter Speicherbereich verfügbar ist, kann das Dokument 102 dem Chipkartenterminal 104 signalisieren, dass es zum Speichern der Nutzerdaten 128 bereit ist. Das Chipkartenterminal 104 übermittelt dann über die Datenverbindung 122 die Nutzerdaten 128 an das Dokument 102 und das Dokument 102 speichert die Nutzerdaten 128 in den Speichermitteln 112.

Stellen jedoch die Prozessormittel 110 nach Benachrichtigung durch das Chipkartenterminal 104 fest, dass die Speichermittel 112 keinen ausreichend großen unbelegten, zusammenhängenden Speicherbereich zur Speicherung der Nutzerdaten 128 bereitstellen können, kann durch die Prozessormittel 110 ein Defragmentierungsvorgang angestoßen werden. Sofern im Zuge dieses Defragmentierungsvorgangs ein ausreichend großer zusammenhängender unbelegter Speicherbereich in den Speichermitteln 112 geschaffen werden kann, signalisiert das Dokument 102 dem Chipkartenterminal 104, dass es zur Aufnahme der Nutzerdaten 128 bereit ist. Ferner kann bei der Feststellung, dass die Speichermittel 112 keinen ausreichend großen unbelegten zusammenhängenden Speicherbereich bereitstellen können vorgesehen sein, dass die Prozessormittel 110 ferner prüfen, ob auf dem Dokument 102 insgesamt ausreichend freier Speicher vorhanden ist um die Nutzerdaten zu speichern. Sollte dabei ermittelt werden, dass auch nach einer Defragmentierung der zusammenhängende freie Speicher nicht ausreichen würde um die Nutzerdaten 128 zu speichern, kann das Dokument 102 dem Chipkartenterminal 104 mitteilen, dass ein Nachladevorgang derzeit nicht möglich ist und das Verfahren an dieser Stelle beenden.

Dabei kann vorgesehen sein, dass während eines Defragmentierungsvorgangs fortlaufend geprüft wird, ob in den Speichermitteln 112 zwischenzeitlich ein ausreichend großer Speicherbereich erzeugt wurde, um die Nutzerdaten 128 aufzunehmen. Beispielsweise kann vorgesehen sein, dass der Defragmentierungsvorgang nicht vollständig durchlaufen wird, sondern zu jenem Zeitpunkt abgebrochen wird, an dem die Speichermittel 112 einen ausreichend großen unbelegten zusammenhängenden Speicherbereich bereitstellen können. Dabei kann ein Abbruch des Defragmentierungsvorgangs jedoch erst dann erfolgen, wenn ein atomarer Teilschritt abgeschlossen wurde, da andernfalls eine Inkonsistenz des Speicherinhalts entstehen könnte.

Um den in dem Dokument 102 vorhandenen Speicher der Speichermittel 112 logisch zu erweitern ist erfindungsgemäß weiter vorgesehen, dass vor einer Speicherung der Nutzerdaten 128 in den Speichermitteln 112 die von dem Chipkartenterminal 104 empfangenen Nutzerdaten 128 komprimiert werden. Hierzu kann das Dokument 102 beispielsweise die empfangenen Nutzerdaten in dem flüchtigen Speicher 142 zwischenspeichern und anschließend komprimieren. Nach der Kompression können die komprimierten Daten dann aus dem flüchtigen Speicher 142 in den nicht-flüchtigen Dokumentenspeicher 112 übertragen werden. Bei der Wahl eines Kompressionsverfahrens kann hierbei grundsätzlich zwischen verlustfreier Kompression und verlustbehafteter Kompression unterschieden werden. Während bei einer verlustfreien Kompression die Nutzerdaten nach Kompression und anschließender Dekompression mit den Ausgangsdaten perfekt übereinstimmen kann bei verlustbehafteter Kompression zumindest ein Teil der Nutzerdaten verfälscht werden. Beinhalten die Nutzerdaten 128 beispielsweise Bilddaten, kann eine verlustbehaftete Kompression ausreichend sein. Sind jedoch Textdaten wie beispielsweise Geburtsdaten, Ein- oder Ausreisedaten oder Passnummern in den Nutzerdaten 128 enthalten kann nur eine verlustfreie Kompression verwendet werden, da bereits eine geringe Abweichung nach Kompression und anschließender Dekompression die Daten unbrauchbar machen könnte.

Insbesondere bei Verwendung einer verlustfreien Kompression kann der Kompressionsmechanismus in Form einer für den Dokumentennutzer transparenten Schicht in dem Dokument 102 ausgeführt sein. Das bedeutet, dass Schreib- oder Lesezugriffe auf die Speichermittel 112 des Dokuments 102 automatisch eine Routine zur Kompression bzw. Dekompression der zu schreibenden oder zu lesenden Daten aufrufen. Somit werden zu schreibende Daten automatisch komprimiert, während zu lesende Daten automatisch dekomprimiert und damit für die Außenwelt nutzbar werden. Diese transparente Schicht kann entweder als eigenständige Anwendung 114 in dem Dokument 102 ausgeführt, oder als Grundfunktion des Chipkartenbetriebssystems 120 implementiert sein.

Ferner ist es möglich, dass beim Empfang von Nutzerdaten 128 nur ein Teil der Nutzerdaten 128, beispielsweise die enthaltenen Bilddaten vor dem Speichern in den Speichermitteln 112 komprimiert werden. Ebenso ist es möglich in den Speichermitteln 112 des Dokuments 102 abgelegte Nutzdaten 108 oder Nutzerdaten 140 nachträglich zu komprimieren, sobald ein akuter Mangel an Speicherplatz erkannt wurde. Ebenfalls keine eine Datenkompression in dem Dokument 102 in vordefinierten zeitlichen Abständen erfolgen.

Im Folgenden werden zwei mögliche Verfahren zur Defragmentierung der Speichermittel 112 des Dokuments 102 beschrieben.

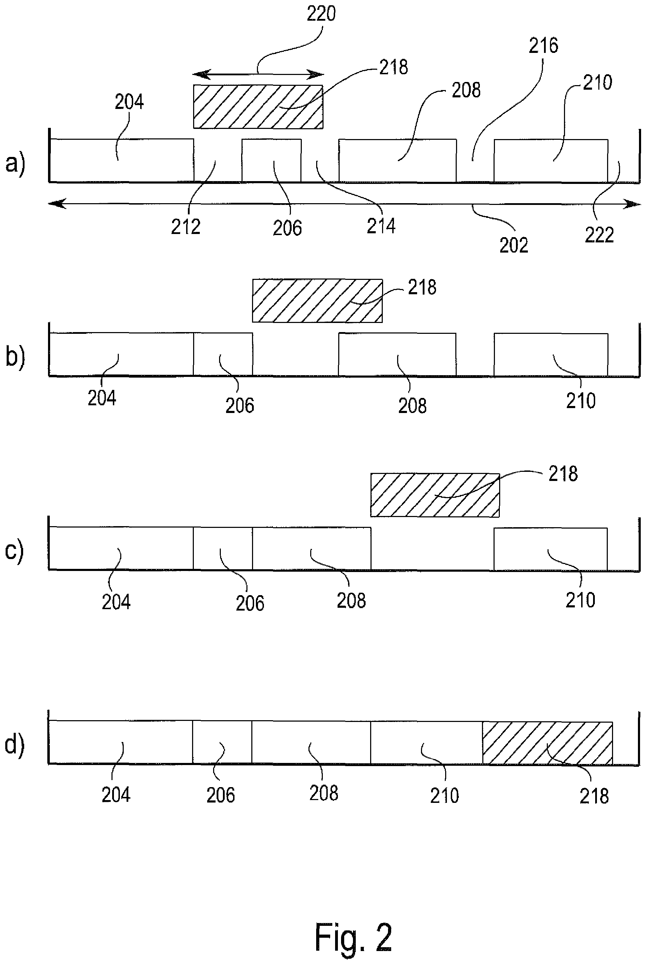

Die Figur 2 ist eine schematische Darstellung eines ersten möglichen Defragmentierungsverfahrens. Dabei wird angenommen, dass die Speichermittel 112 eines Dokuments 112 eine Größe bzw. ein Speichervolumen aufweisen, welches durch den Pfeil 202 angedeutet wird. Wie in Figur 2 a) dargestellt, umfasst der Speicher vier belegte Speicherbereiche 204, 206, 208 und 210. Zwischen diesen belegten Speicherbereichen befinden sich drei unbelegte Speicherbereiche 212, 214 und 216. Nach dem Speicherblock 210 folgt ein weiterer freier Speicherbereich 222, der sich bis zum Ende des Gesamtspeichers erstreckt. Ferner wird durch den Block 218 der notwendige Speicherbereich der Größe 220 angedeutet, welcher erforderlich ist, um einen nachzuladenden Block aus Nutzerdaten 218 in den Speichermitteln 112 des Dokuments 102 abzulegen. Wie in Figur 2 a) dargestellt, ist im Ausgangszustand des Speichers 112 keiner der unbelegten Speicherbereiche 212, 214 oder 216 groß genug, um die Nutzerdaten 218 aufzunehmen. Daher wird im Zuge des erfindungsgemäßen Verfahrens eine Defragmentierung des Speichers 112 angestoßen.

Es sei an dieser Stelle angemerkt, dass die Verschiebung der Blöcke 204, 206, 208 und 210 unabhängig voneinander jeweils sowohl physikalisch als auch logisch erfolgen kann.

In einem ersten Schritt des hier dargestellten Defragmentierungsverfahrens wird nun ein erster unbelegter Speicherbereich ermittelt, in diesem Fall der Speicherbereich 212. Anschließend wird der erste auf den unbelegten Speicherbereich 212 folgende belegte Speicherbereich 206 ermittelt. Dieser wird dann an die Anfangsposition des unbelegten Speicherbereichs 212 verschoben. Das Ergebnis dieses Schrittes ist in Figur 2b dargestellt. Da auch nach diesem ersten Defragmentierungsschritt nach wie vor kein ausreichend großer unbelegter Speicherbereich vorhanden ist, um die Anwendung 218 zu speichern, wird in einem nachfolgenden Defragmentierungsschritt der belegte Speicherbereich 208 in den auf den belegten Speicherbereich 206 folgenden unbelegten Speicherbereich verschoben. Das Ergebnis dieser Verschiebung ist in Figur 2 c) dargestellt.

Da auch in der in Figur 2 c) dargestellten Situation nach wie vor der unbelegte Speicherbereich nicht groß genug ist, um die Nutzerdaten 218 aufzunehmen, wird auch der belegte Speicherbereich 210 in den verbleibenden, unbelegten Speicherbereich verschoben, sodass alle vier belegten Speicherbereiche 204, 206, 208 und 210 eine zusammenhängende Kette von belegten Speicherbereichen bilden. Dies ist in Figur 2 d) dargestellt. Erst durch diesen letzten Defragmentierungsschritt, dessen Ergebnis in Figur 2 d) dargestellt ist, wird es möglich, die Nutzerdaten 218 in den nun entstandenen unbelegten Speicherbereich zu speichern.

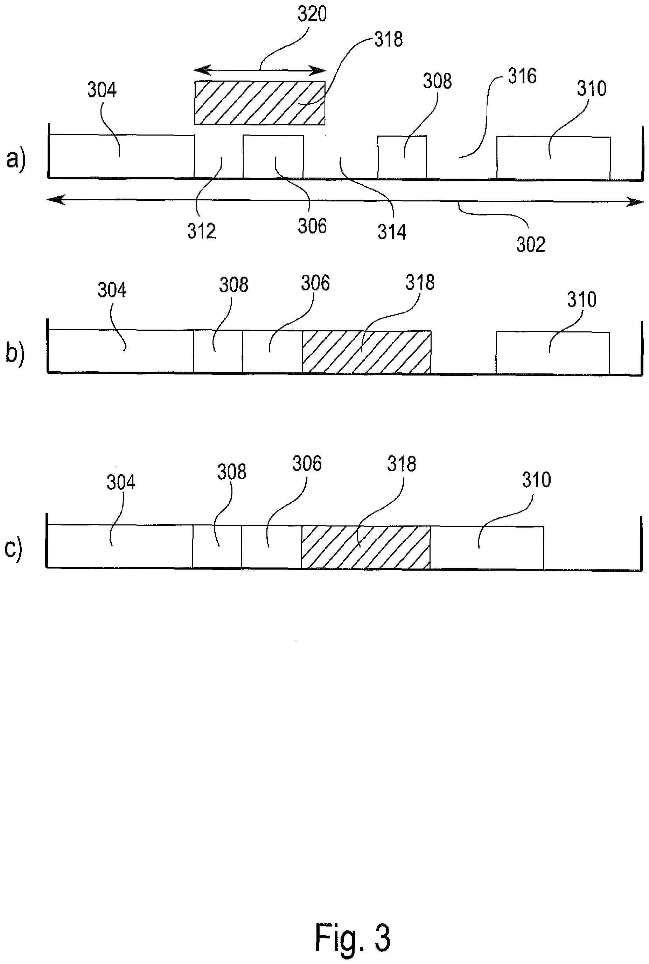

Die Figur 3 ist eine schematische Darstellung eines weiteren möglichen Defragmentierungsverfahrens im Sinne der vorliegenden Erfindung. Analog zu der in Figur 2 dargestellten Ausgangssituation sind auch hier in einem Speicher einer definierten Größe, angedeutet durch den Pfeil 302, vier belegte Speicherbereiche 302, 304, 306 und 308 vorhanden. Wie ferner in Figur 3 a) dargestellt, ist keiner der unbelegten Speicherbereiche 312, 314 oder 316 ausreichend groß, um die zu speichernden Nutzerdaten 318 mit dem Speicherbedarf 320 aufzunehmen.

Bei dem hier dargestellten Verfahren ist nun vorgesehen, dass zunächst die Größe der jeweiligen belegten Speicherbereiche 304, 306, 308 und 310 sowie die Größe der unbelegten Speicherbereiche 312, 314 und 316 ermittelt wird. Anschließend werden belegte Speicherbereiche an die Position eines unbelegten Speicherbereichs gleicher oder größerer Größe verschoben. Dies ist exemplarisch in Figur 3 b) dargestellt. Dabei wurde bei der Ermittlung der Größen der belegten und unbelegten Speicherbereiche zuvor festgestellt, dass der belegte Speicherbereich 308 genauso groß ist wie der unbelegte Speicherbereich 312. Daher wurde der belegte Speicherbereich 308 an die Position des unbelegten Speicherbereichs 312 verschoben. Bereits durch diese einfache Verschiebung des Speicherbereichs 308 wurde ein ausreichend großer unbelegter Speicherbereich geschaffen, um die Nutzerdaten 318 aufzunehmen.

Wäre man ausgehend von der in Figur 3 a) dargestellten Situation analog zu dem in Figur 2 beschriebenen Verfahren vorgegangen, wäre zunächst der Speicherbereich 306 verschoben worden, wobei durch diese Verschiebung noch kein ausreichend großer Speicherbereich entstanden wäre. Es wäre daher notwendig gewesen sowohl den belegten Speicherbereich 306 als auch den belegten Speicherbereich 308 zu verschieben. Dies konnte jedoch durch den in Figur 3 dargestellten Defragmentierungsvorgang vermieden werden.

Es kann ferner vorgesehen sein, dass auch nach dem Speichern der Nutzerdaten 318 ein Defragmentierungsvorgang fortgeführt wird, sodass die belegten Speicherbereiche des Speichers 112 des Dokuments 102 einen zusammenhängenden Speicherbereich ergeben. Hierzu kann beispielsweise der belegte Speicherbereich 310 an dem Speicherbereich, welcher durch die Anwendung 318 belegt wird, herangeschoben werden. Dieser Zustand ist in Figur 3 c) dargestellt.

### Bezugszeichenliste

- 100: System
- 102: Dokument
- 104: Chipkartenterminal
- 106: Kommunikationsschnittstelle
- 108: Nutzdaten
- 110: Prozessormittel
- 112: Speichermittel
- 114: Anwendungen
- 116: Kommunikationsschnittstelle
- 118: Prozessormittel
- 120: Chipkartenbetriebssystem
- 122: Datenverbindung
- 124: Programmmodul
- 126: Programmmodul
- 128: Nutzerdaten
- 130: Authentisierungstoken
- 132: Nachladetoken
- 134: Kommunikationsschnittstelle
- 136: Energiequelle
- 138: Steuermodul
- 140: Nutzerdaten
- 142: flüchtiger Speicher
- 202: Speichergröße
- 204: belegter Speicherbereich
- 206: belegter Speicherbereich
- 208: belegter Speicherbereich
- 210: belegter Speicherbereich
- 212: unbelegter Speicherbereich
- 214: unbelegter Speicherbereich
- 216: unbelegter Speicherbereich
- 218: Nutzerdaten
- 220: Speicherbedarf der Nutzerdaten
- 222: unbelegter Speicherbereich
- 302: Speichergröße
- 304: belegter Speicherbereich
- 306: belegter Speicherbereich
- 308: belegter Speicherbereich
- 310: belegter Speicherbereich
- 312: unbelegter Speicherbereich
- 314: unbelegter Speicherbereich
- 316: unbelegter Speicherbereich
- 318: Nutzerdaten
- 320: Speicherbedarf der Nutzerdaten

## Patentansprüche

1. Verfahren zum Speichern von Nutzerdaten (128) in einen nicht-flüchtigen Speicher (112) eines Dokuments (102), wobei der nicht-flüchtige Speicher (112) unbelegte Speicherbereiche (212, 214...) und mit Nutzerdaten (140) belegte Speicherbereiche (204, 206,...) umfasst, wobei es sich bei den Nutzerdaten (128, 140) um zusammenhängende Datenblöcke handelt, wobei das Dokument (102) ferner einen flüchtigen Speicher (142) und eine Kommunikationsschnittstelle (106) umfasst, wobei das Speichern der Nutzerdaten (128) umfasst:
• Empfangen der Nutzerdaten (128) über die Kommunikationsschnittstelle (106),
• Komprimieren der Nutzerdaten (128),
• Speichern der komprimierten Nutzerdaten (128) in dem flüchtigen Speicher (142),
• Ermitteln der notwendigen Länge (220) eines unbelegten zusammenhängenden Speicherbereichs, um die komprimierten Nutzerdaten (128) in dem nicht-flüchtigen Speicher (112) zu speichern,
• Ermitteln, ob der nicht-flüchtige Speicher (112) einen zusammenhängenden unbelegten Speicherbereich aufweist, dessen Länge mindestens der zuvor ermittelten Länge (220) entspricht,
• Falls der nicht-flüchtige Speicher (112) keinen zusammenhängenden unbelegten Speicherbereich der zuvor ermittelten Länge (220) aufweist, Defragmentieren des nicht-flüchtigen Speichers (112), wobei das Defragmentieren ein Umordnen der in den belegten Speicherbereichen gespeicherten Nutzerdaten (140) umfasst, sodass mehrere der unbelegten Speicherbereiche einen zusammenhängenden unbelegten Speicherbereich bilden, der zumindest die zuvor ermittelte Länge (220) aufweist,
• Verschieben der komprimierten Nutzerdaten (128) aus dem flüchtigen Speicher (142) in den unbelegten Speicherbereich des nicht-flüchtigen Speichers (112).

2. Verfahren nach einem der vorhergehenden Ansprüche, wobei es sich bei den Nutzerdaten (128) um Visa-Daten handelt.

3. Verfahren nach einem der vorhergehenden Ansprüche, wobei die Nutzerdaten (128) während des Empfangens der Nutzerdaten (128) über die Schnittstelle (106) komprimiert werden.

4. Verfahren nach einem der vorhergehenden Ansprüche, wobei das Defragmentieren das Umordnen der in den belegten Speicherbereichen (204, 206,...) gespeicherten Nutzerdaten (140) durch physikalisches Verschieben der Nutzerdaten (140) umfasst.

5. Verfahren nach einem der vorhergehenden Ansprüche, wobei die logische Reihenfolge der Speicherbereiche des nicht-flüchtigen Speichers (112) durch eine Zuordnungstabelle festgelegt ist, wobei das Defragmentieren das Umordnen eines Teils der belegten Speicherbereiche (204, 206,...) durch Manipulation der Zuordnungstabelle umfasst.

6. Verfahren nach einem der vorhergehenden Ansprüche, wobei das Defragmentieren umfasst:
• Ermitteln einer ersten Position eines ersten, unbelegten Speicherbereichs (212),
• Ermitteln einer zweiten Position eines zweiten, belegten Speicherbereichs (206), wobei der zweite belegte Speicherbereich (206) in dem Speicher dem ersten freien Speicherbereich (212) logisch direkt nachfolgt,
• Verschieben der in dem zweiten belegten Speicherbereich (206) gespeicherten Nutzerdaten (140) an die erste Position.

7. Verfahren nach einem der Ansprüche 1-5, wobei das Defragmentieren umfasst:
• Ermitteln der jeweiligen Positionen und Längen der belegten Speicherbereiche (204, 206,...),
• Ermitteln der jeweiligen Positionen und Längen der unbelegten Speicherbereiche (212,214,...),
• Verschieben der in belegten Speicherbereichen gespeicherten Nutzerdaten (140) an die Positionen von unbelegten Speicherbereichen gleicher oder größerer Länge.

8. Verfahren nach einem der Ansprüche 4-7, wobei das Defragmentieren ferner das Definieren eines Schwellwertes für die Länge eines belegten Speicherbereiches (204, 206,...) umfasst, wobei das Verschieben von in belegten Speicherbereichen (204, 206,...) gespeicherten Nutzerdaten (140) mit einer Länge, die größer ist als der Schwellwert durch Manipulation der Zuordnungstabelle erfolgt und wobei das Verschieben von in belegten Speicherbereichen (204, 206,...) gespeicherten Nutzerdaten (140) mit einer Länge, die kleiner ist als der Schwellwert durch physikalisches Verschieben der Nutzerdaten (140) der belegten Speicherbereiche erfolgt (204, 206,...).

9. Verfahren nach einem der vorhergehenden Ansprüche, wobei das Defragmentieren ferner das Erzeugen einer Protokolldatei umfasst, wobei die Protokolldatei die während eines Defragmentiervorgangs erfolgten Verschiebungen von Speicherbereichen wiedergibt.

10. Dokument (102) mit Speichermitteln (112), Prozessormitteln (110), einem flüchtigen Speicher (142) und einer Kommunikationsschnittstelle (106), insbesondere einer kontaktlosen Kommunikationsschnittstelle, wobei das Dokument (102) dazu ausgebildet ist, über die Kommunikationsschnittstelle (106) Nutzerdaten (128) zum Speichern in den Speichermitteln (112) zu empfangen, wobei die Prozessormittel (110) und die Speichermittel (112) dazu ausgebildet sind das Verfahren nach einem der vorhergehenden Ansprüche auszuführen.

11. Dokument nach Anspruch 10, wobei es sich bei dem Dokument um ein elektronisches Ausweisdokument, insbesondere einen Reisepass, Personalausweis, Visa, Führerschein, Fahrzeugschein, Fahrzeugbrief, Firmenausweis, eine Gesundheitskarte, und/oder um elektronische Zahlungsmittel, insbesondere eine Banknote, Bankkarte, Kreditkarte, Frachtbriefe und/oder sonstige Berechtigungsnachweise handelt.

12. Elektronisches System (100) mit einem Chipkartenterminal (104) zum Speichern von Nutzerdaten (128) in einem Dokument (102) und einem Dokument (102) nach Anspruch 11, wobei das Chipkartenterminal (104) eine Kommunikationsschnittstelle (116), insbesondere eine kontaktlose Kommunikationsschnittstelle umfasst und dazu ausgebildet ist, über die Kommunikationsschnittstelle (116) die Nutzerdaten (128) in das Dokument (102) zu speichern.

13. Elektronisches System (100) nach Anspruch 12, wobei das Chipkartenterminal (104) eine mechanische Aufnahme für das Dokument (102) aufweist, wobei die mechanische Aufnahme dazu ausgebildet ist, bei einem Speichervorgang das Dokument (102) so lange vor einem Entfernen aus dem Chipkartenterminal (104) zu schützen, bis das Speichern der Nutzerdaten (128) in das Dokument (102) abgeschlossen ist.

## Claims

1. A method for storing user data (128) in a non-volatile memory (112) of a document (102), wherein the non-volatile memory (112) comprises unoccupied memory areas (212, 214, ...) and memory areas (204, 206, ...) occupied with user data (140), wherein the user data (128, 140) are contiguous data blocks, wherein the document (102) further comprises a volatile memory (142) and a communication interface (106), wherein the storing of the user data (128) comprises:
• receiving the user data (128) via the communication interface (106),
• compressing the user data (128),
• storing the compressed user data (128) in the volatile memory (142),
• determining the necessary length (220) of an unoccupied contiguous memory area in order to store the compressed user data (128) in the non-volatile memory (112),
• determining whether the non-volatile memory (112) has a contiguous unoccupied memory area, the length of which corresponds at least to the previously determined length (220),
• in the event that the non-volatile memory (112) does not have a contiguous unoccupied memory area of the previously determined length (220), defragmenting the non-volatile memory (112), wherein the defragmenting comprises a rearranging of the user data (140) stored in the occupied memory areas so that a plurality of the unoccupied memory areas form a contiguous unoccupied memory area that is at least of the previously determined length (220), and
• moving the compressed user data (128) from the volatile memory (142) into the unoccupied memory area of the non-volatile memory (112).

2. The method according to the preceding claim, wherein the user data (128) is visa data.

3. The method according to either one of the preceding claims, wherein the user data (128) are compressed during the receipt of the user data (128) via the interface (106).

4. The method according to any one of the preceding claims, wherein the defragmenting comprises the rearranging of the user data (140) stored in the occupied memory areas (204, 206, ...) by physical movement of the user data (140).

5. The method according to any one of the preceding claims, wherein the logical sequence of the memory areas of the non-volatile memory (112) is determined by an allocation table, wherein the defragmenting comprises the rearranging of part of the occupied memory areas (204, 206, ...) by manipulation of the allocation table.

6. The method according to any one of the preceding claims, wherein the defragmenting comprises:
• determining a first position of a first, unoccupied memory area (212),
• determining a second position of a second, occupied memory area (206), wherein the second occupied memory area (206) in the memory directly follows the first free memory area (212) logically,
• moving the user data (140) stored in the second occupied memory area (206) to the first position.

7. The method according to any one of claims 1-5, wherein the defragmenting comprises:
• determining the various positions and lengths of the occupied memory areas (204, 206, ...),
• determining the various positions and lengths of the unoccupied memory areas (212, 214, ...),
• moving the user data (140) stored in occupied memory areas to the positions of unoccupied memory areas of equal or greater length.

8. The method according to any one of claims 4-7, wherein the defragmenting also comprises the definition of a threshold value for the length of an occupied memory area (204, 206, ...), wherein user data (140) stored in occupied memory areas (204, 206, ...) and having a length greater than the threshold value are moved by manipulation of the allocation table, and wherein user data (140) stored in occupied memory areas (204, 206, ...) and having a length less than the threshold value are moved by physical movement of the user data (140) of the occupied memory areas (204, 206, ...).

9. The method according to any one of the preceding claims, wherein the defragmenting also comprises the generation of a protocol file, wherein the protocol file reflects the movements of memory areas performed during a defragmenting process.

10. A document (102) with memory means (112), processor means (110), a volatile memory (142), and a communication interface (106), in particular a contactless communication interface, wherein the document (102) is designed to receive user data (128) via the communication interface (106) for storage in the memory means (112), wherein the processor means (110) and the memory means (112) are configured to carry out the method according to any one of the preceding claims.

11. The document according to claim 10, wherein the document is an electronic identification document, in particular a passport, personal identity card, visa, driver's licence, vehicle certificate, vehicle registration document, company identification document, health insurance card and/or electronic payment means, in particular a banknote, bank card, credit card, consignment note and/or other proof of authority.

12. An electronic system (100) with a chip card terminal (104) for storing user data (128) in a document (102) and a document (102) according to claim 11, wherein the chip card terminal (104) comprises a communication interface (116), in particular a contactless communication interface, and is configured to store the user data (128) in the document (102) via the communication interface (116).

13. The electronic system (100) according to claim 12, wherein the chip card terminal (104) has a mechanical holder for the document (102), wherein the mechanical holder is configured, during a storing process, to protect the document (102) against removal from the chip card terminal (104) until the storing of the user data (128) in the document (102) is complete.

## Revendications

1. Procédé de stockage de données d'utilisateur (128) dans une mémoire non volatile (112) d'un document (102), où la mémoire non volatile (112) comprend des zones de mémoire non occupées (212, 214...) et des zones de mémoire occupées (204, 206, ...) par des données d'utilisateur (140), où, dans le cas des données d'utilisateur (128, 140), il s'agit de blocs de données contigus, où le document (102) comprend en outre une mémoire volatile (142) et une interface de communication (106), où le stockage des données d'utilisateur (128) comprend :
• la réception des données d'utilisateur (128) par le biais de l'interface de communication (106),
• la compression des données d'utilisateur (128),
• le stockage des données d'utilisateur (128) comprimées dans la mémoire volatile (142),
• la détermination de la taille (220) nécessaire d'une zone de mémoire contigüe non occupée pour stocker les données d'utilisateur (128) comprimées dans la mémoire non volatile (112),
• la détermination que la mémoire non volatile (112) présente une zone de mémoire contigüe non occupée dont la taille correspond au moins à la taille (220) précédemment déterminée,
• dans le cas où la mémoire non volatile (112) ne présente pas de zone de mémoire contigüe non occupée de la taille (220) précédemment déterminée, la défragmentation de la mémoire non volatile (112), où la défragmentation comprend un réarrangement des données d'utilisateur (140) stockées dans les zones de mémoire occupées de sorte que plusieurs parmi les zones de mémoire non occupées forment une zone de mémoire contigüe non occupée qui présente au moins la taille (220) précédemment déterminée,
• le déplacement des données d'utilisateur (128) comprimées de la mémoire volatile (142) dans la zone de mémoire non occupée de la mémoire non volatile (112).

2. Procédé selon l'une des revendications précédentes, dans lequel, dans le cas des données d'utilisateur (128), il s'agit de données de visa.

3. Procédé selon l'une des revendications précédentes, dans lequel les données d'utilisateur (128) sont comprimées pendant la réception des données d'utilisateur (128) par le biais de l'interface (106).

4. Procédé selon l'une des revendications précédentes, dans lequel la défragmentation comprend le réarrangement des données d'utilisateur (140) stockées dans les zones de mémoire (204, 206, ...) occupées par un déplacement physique des données d'utilisateur (140).

5. Procédé selon l'une des revendications précédentes, dans lequel la suite logique des zones de mémoire de la mémoire non volatile (112) est fixée par un tableau d'attribution, où la défragmentation comprend le réarrangement d'une partie des zones de mémoires occupées (204, 206, ...) par une manipulation du tableau d'attribution.

6. Procédé selon l'une des revendications précédentes, dans lequel la défragmentation comprend :
• la détermination d'une première position d'une première zone de mémoire non occupée (212),
• la détermination d'une deuxième position d'une deuxième zone de mémoire occupée (206), où la deuxième zone de mémoire occupée (206) suit directement de manière logique la première zone de mémoire libre (212) dans la mémoire,
• le déplacement des données d'utilisateur (140) stockées dans la deuxième zone de mémoire occupée (206) vers la première position.

7. Procédé selon l'une des revendications 1 à 5, dans lequel la défragmentation comprend :
• la détermination des positions et des tailles respectives des zones de mémoire occupées (204, 206, ...),
• la détermination des positions et des tailles respectives des zones de mémoires non occupées (212, 214, ...),
• le déplacement des données d'utilisateur (140) stockées dans les zones de mémoires occupées vers les positions de zones de mémoire non occupées de même taille ou de taille plus grande.

8. Procédé selon l'une des revendications 4 à 7, dans lequel la défragmentation comprend en outre la définition d'une valeur de seuil pour la taille d'une zone de mémoire occupée (204, 206, ...), où le déplacement de données d'utilisateur (140) stockées dans des zones de mémoire occupées (204, 206, ...) avec une taille, qui est supérieure à la valeur de seuil, a lieu par une manipulation du tableau d'attribution et où le déplacement de données d'utilisateur (140) stockées dans des zones de mémoire occupées (204, 206, ...) avec une taille, qui est inférieure à la valeur de seuil, a lieu par un déplacement physique des données d'utilisateurs (140) des zones de mémoires occupées (204, 206, ...).

9. Procédé selon l'une des revendications précédentes, dans lequel la défragmentation comprend en outre la génération d'une donnée de protocole, où la donnée de protocole reproduit les déplacements de zones de mémoire ayant eu lieu pendant un processus de défragmentation.

10. Document (102) doté de moyens de mémoire (112), de moyens de processeurs (110), d'une mémoire volatile (142), et d'une interface de communication (106), notamment d'une interface de communication sans contact, où le document (102) est conçu pour recevoir des données d'utilisateur (128) à stocker dans les moyens de mémoire (112) par le biais de l'interface de communication (106), où les moyens de processeurs (110) et les moyens de mémoire (112) sont conçus pour exécuter le procédé selon l'une des revendications précédentes.

11. Document selon la revendication 10, où, dans le cas du document, il s'agit d'un document d'identité électronique, notamment d'un passeport, d'une carte d'identité, d'un visa, d'un permis de conduire, d'une immatriculation de véhicule, d'un enregistrement de véhicule, d'une carte d'entreprise, d'une carte de santé, et/ou d'un moyen de paiement électronique, notamment d'un billet de banque, d'une carte bancaire, d'une carte de crédit, de récépissés de transport et/ou d'autres justificatifs d'identité.

12. Système électronique (100) doté d'un terminal de carte à puce (104) pour le stockage de données d'utilisateur (128) dans un document (102) et d'un document (102) selon la revendication 11, où le terminal de carte à puce (104) comprend une interface de communication (116), notamment une interface de communication sans contact, et est conçu pour stocker des données d'utilisateur (128) dans le document (102) par le biais de l'interface de communication (116).

13. Système électronique (100) selon la revendication 12, dans lequel le terminal de carte à puce (104) présente une réception mécanique pour le document (102), où la réception mécanique est conçue pour protéger, lors d'un processus de stockage, le document (102) contre un retrait à partir du terminal de carte à puce (104) aussi longtemps que le stockage des données d'utilisateur (128) dans le document (102) n'est pas terminé.
